# EUROPÄISCHE PATENTSCHRIFT

(11) **EP 3 308 214 B1**
(45) Veröffentlichungstag und Bekanntmachung des Hinweises auf die Patenterteilung: **09.12.2026**
(21) Anmeldenummer: 16731071.3
(22) Anmeldetag: 10.06.2016
(51) Int. Cl.: B32B 17/10, G02B 27/01

(54) **PROJEKTIONSANORDNUNG FÜR EIN KONTAKTANALOGES HEAD-UP-DISPLAY (HUD)**
PROJECTION DEVICE FOR A CONTACT-ANALOGUE HEADS-UP DISPLAY (HUD)
SYSTÈME DE PROJECTION POUR UN ÉCRAN TÊTE HAUTE ANALOGUE DE CONTACT VISUEL (HUD)

(30) Priorität: 11.06.2015 EP 15171628
(43) Veröffentlichungstag der Anmeldung: 18.04.2018
(73) Patentinhaber: Saint-Gobain Sekurit France, 60150 Thourotte (FR)
(72) Erfinder: KREMERS, Stephan, 52525 Heinsberg (DE); ARNDT, Martin, 52066 Aachen (DE); GOSSEN, Stefan, 52072 Aachen (DE)
(74) Vertreter: Gebauer, Dieter Edmund
(86) Internationale Anmeldenummer: PCT/EP2016/063406
(87) Internationale Veröffentlichungsnummer: WO 2016/198678

(56) Entgegenhaltungen:
- WO-A1-2009/071135
- WO-A1-2009/071135
- JP-A- 2011 207 645
- JP-A- 2011 207 645
- US-A1- 2005 142 332
- US-A1- 2005 142 332
- US-A1- 2007 009 714
- US-A1- 2007 009 714
- US-A1- 2012 094 084
- US-A1- 2012 094 084

## Beschreibung

Die Erfindung betrifft eine Projektionsanordnung für ein Head-Up-Display (HUD) und ein Verfahren zu deren Herstellung.

Moderne Automobile werden in zunehmendem Maße mit sogenannten Head-Up-Displays (HUDs) ausgestattet. Mit einem Projektor, beispielsweise im Bereich des Armaturenbretts oder im Dachbereich, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen. Die Projektionsdistanz (Abstand zwischen virtuellem Bild und Fahrer) eines klassischen HUD zur Anzeige statischer Informationen beträgt typischerweise etwa 2 m.

Eine neuere Variante des HUD wird als kontaktanaloges HUD oder *Augmented Reality* HUD bezeichnet. Diese HUDs zeichnen sich durch einen größeren HUD-Bereich (Projektionsfläche auf der Scheibe) und eine deutlich größere Projektionsdistanz aus von mindestens 5 m, typischerweise sogar über 7 m. Kontaktanaloge HUDs eröffnen die Möglichkeit, nicht mehr nur abzulesende Informationen statisch auf die Scheibe zu projizieren, sondern die optische Information zur Kennzeichnung von Elementen der realen Fahrzeugumgebung zu verwenden - beispielhafte Anwendungen sind die optische Markierung von Fahrbahnbegrenzungen, das optische Hervorheben von Fußgängern am Straßenrand, Navigationshinweise direkt auf der Fahrbahn oder die Markierung von Fahrzeugen, die vom Fahrassistenzsystem erkannt worden sind. Die größere Projektionsdistanz wird durch eine größere optische Weglänge der Strahlen innerhalb des Projektors erzeugt, etwa durch zusätzliche Spiegel und ein größeres Volumen. Kontaktanaloge HUDs sind beispielsweise bekannt aus DE102014001710A1, WO2014079567A1, US2013249942A1, US2014354692A1, US2014375816A1 und WO2013136374A1.

Bei HUDs tritt das grundsätzliche Problem auf, dass das Projektorbild an beiden Oberflächen der Windschutzscheibe reflektiert wird. Dadurch nimmt der Fahrer nicht nur das gewünschte Hauptbild wahr, sondern auch ein leicht versetztes, in der Regel intensitätsschwächeres Nebenbild. Letzteres wird gemeinhin auch als Geisterbild bezeichnet. Dieses Problem wird im Allgemeinen dadurch gelöst, dass die reflektierenden Oberflächen mit einem bewusst gewählten Winkel zueinander angeordnet werden, sodass Hauptbild und Geisterbild überlagert werden, wodurch das Geisterbild nicht mehr störend auffällt. Der Keilwinkel beträgt bei herkömmlichen Verbundgläsern für Head-Up-Displays typischerweise etwa 0,5 mrad.

Windschutzscheiben bestehen aus zwei Glasscheiben, welche über eine thermoplastische Folie miteinander laminiert sind. Sollen die Oberflächen der Glasscheiben wie beschrieben in einem Winkel angeordnet werden, so ist es üblich, eine thermoplastische Folie mit nichtkonstanter Dicke zu verwenden. Man spricht auch von einer keilförmigen Folie oder Keilfolie. Der Winkel zwischen den beiden Oberflächen der Folie wird als Keilwinkel bezeichnet. Der Keilwinkel kann über die gesamte Folie konstant (lineare Dickenänderung) sein oder sich positionsabhängig ändern (nichtlineare Dickenänderung). Verbundgläser mit Keilfolien sind beispielsweise aus WO2009/071135A1, EP1800855B1 oder EP1880243A2 bekannt.

Keilfolien werden typischerweise mittels Extrusion hergestellt, wobei eine keilförmige Extrusionsdüse verwendet wird. Die Herstellung einer Keilfolie mit einem gewünschten Keilwinkel, welcher unter anderem von der konkreten Scheibengeometrie und der Projektionsanordnung des Head-Up-Displays abhängig ist, ist sehr teuer und aufwendig.

Die vorstehend bereits zitierte WO2009/071135A1 betrifft eine gekrümmte Fahrzeug-Windschutzscheibe aus Verbundglas, bei der störende Doppelbilder bzw. HUD-Geisterbilder durch einen lokal angepassten Keilwinkel reduziert werden sollen. Der Keilwinkel ist dabei nicht konstant, sondern wird abhängig von der lokalen Scheibenkrümmung, dem Einfallswinkel der Lichtstrahlen und der Einbausituation bestimmt. Die technische Umsetzung erfolgt vorzugsweise über eine thermoplastische Zwischenfolie mit entsprechendem Dickenprofil, das beispielsweise durch Extrusion, selektives Strecken oder Beschichtung hergestellt werden kann.

US2007009714A1 betrifft polymerische Zwischenlagen, insbesondere PVB-Zwischenfolien, mit einem nicht-einheitlichen Dickenprofil bzw. Keilprofil für Head-up-Display-Anwendungen. Ziel ist es, durch eine keilförmige Zwischenlage die von den verschiedenen Glasoberflächen reflektierten Bilder so zu überlagern, dass das HUD-Geisterbild reduziert oder im Idealfall beseitigt wird.

Der Erfindung liegt die Aufgabe zugrunde, eine Projektionsanordnung für ein Head-Up-Display (HUD) mit einer verbesserten Windschutzscheibe bereitzustellen, welche kostengünstiger und einfacher herzustellen ist und durch welche die Problematik der Geisterbilder wirksam minimiert wird.

Diese Aufgabe wird erfindungsgemäß durch eine Projektionsanordnung gemäß Anspruch 1 gelöst. Bevorzugte Ausführungen gehen aus den Unteransprüchen hervor.

Die erfindungsgemäße Projektionsanordnung für ein Head-Up-Display (HUD) umfasst mindestens eine Fahrzeug-Windschutzscheibe (insbesondere eines Kraftfahrzeugs, beispielsweise eines Personenkraftwagens) und einen Projektor. Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der im Fahrzeug befindliche Betrachter von ihm aus gesehen hinter der Windschutzscheibe wahrnimmt. Der durch den Projektor bestrahlbare Bereich der Windschutzscheibe wird als HUD-Bereich bezeichnet. Der Projektor ist auf den HUD-Bereich gerichtet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper. Der Strahl, der zwischen dem Projektor und der Mitte der Eyebox verläuft, wird gemeinhin als Mittenstrahl bezeichnet. Er ist ein charakteristischer Bezugsstrahl für die Konzeption einer HUD-Projektionsanordnung.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Windschutzscheibe umfasst eine Außenscheibe und eine Innenscheibe, die über eine thermoplastische Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Innenraum (Fahrzeuginnenraum) zugewandte Scheibe der Verbundscheibe bezeichnet. Mit Außenscheibe wird die der äußeren Umgebung zugewandte Scheibe bezeichnet.

Die Dicke der Zwischenschicht ist im vertikalen Verlauf zwischen der Oberkante und der Unterkante der Windschutzscheibe zumindest abschnittsweise veränderlich. Mit "abschnittsweise" ist hier gemeint, dass der vertikale Verlauf zwischen Oberkante und Unterkante zumindest einen Abschnitt aufweist, in dem sich die Dicke der Zwischenschicht ortsabhängig ändert, die Zwischenschicht also einen Keilwinkel aufweist. Die Dicke der Zwischenschicht ist zumindest im HUD-Bereich veränderlich. Die Dicke kann sich aber auch in mehreren Abschnitten ändern oder im gesamten vertikalen Verlauf, beispielsweise von der Unterkante zur Oberkante im Wesentlichen stetig zunehmen. Mit vertikalem Verlauf ist der Verlauf zwischen Oberkante und Unterkante mit Verlaufsrichtung im Wesentlichen senkrecht zur Oberkante bezeichnet. Da die Oberkante bei Windschutzscheiben stark von einer Geraden abweichen kann, ist der vertikale Verlauf im Sinne der Erfindung präziser ausgedrückt senkrecht zu einer (geraden) Verbindungslinie zwischen den Ecken der Oberkante ausgerichtet. Die Zwischenschicht weist zumindest abschnittsweise einen endlichen Keilwinkel auf, also einen Keilwinkel größer 0°, nämlich in dem Abschnitt, in dem die Dicke veränderlich ist. Mit Keilwinkel wird der Winkel zwischen den beiden Oberflächen der Zwischenschicht bezeichnet. Ist der Keilwinkel nicht konstant, so sind zu seiner Messung an einem Punkt die Tangenten an die Oberflächen heranzuziehen.

Das erfindungsgemäße Head-Up-Display ist ein sogenanntes kontaktanaloges HUD oder *Augmented Reality* HUD. Bei einem kontaktanalogen HUD wird nicht lediglich eine Information auf einen begrenzten Bereich der Windschutzscheibe projiziert, sondern Elemente der äußeren Umgebung in die Darstellung einbezogen. Beispiele hierfür sind die Markierung eines Fußgängers, die Anzeige des Abstands zu einem vorausfahrenden Fahrzeug oder die Projektion einer Navigationsangabe direkt auf die Fahrbahn, beispielsweise zur Markierung der zu wählenden Fahrspur. Das kontaktanaloge HUD wird dadurch von einem klassischen, statischen HUD unterschieden, dass die Projektionsdistanz mindestens 5 m beträgt. Bei einem statischen HUD ist die Projektionsdistanz deutlich geringer, typischerweise etwa 2 m. Mit Projektionsdistanz wird im Sinne der Erfindung der Abstand zwischen dem virtuellen Bild und dem Betrachter, also in der Regel der Kopf des Fahrers, bezeichnet. Die Projektionsdistanz beträgt mindestens 7 m. Die Projektionsdistanz beträgt bevorzugt höchstens 15 m.

Bei einer Projektionsanordnung eines kontaktanalogen HUDs ist die Projektionsdistanz für alle projizierten Bilder im Wesentlichen konstant. Auch Projektionen, die der Betrachter subjektiv mit unterschiedlichem Abstand wahrnehmen soll, haben in der Realität im Wesentlichen die gleiche Projektionsdistanz. Der subjektive Eindruck eines unterschiedlichen Abstands wird durch geometrische optische Effekte erreicht.

Der Abstand zwischen Windschutzscheibe und virtuellem Bild wird üblicherweise als Bildweite bezeichnet. Da typischerweise der Kopf des Fahrers einen Abstand von etwa einem Meter zur Windschutzscheibe aufweist, ist die Bildweite näherungsweise um 1 m geringer als die Projektionsdistanz. Alternativ zur Projektionsdistanz kann daher mit hinreichender Genauigkeit auch die Bildweite als Kriterium herangezogen werden. Die Bildweite beträgt demnach bevorzugt mindestens 4 m, besonders bevorzugt mindestens 6 m, und bevorzugt höchstens 14 m.

Der maximale Keilwinkel beträgt kleiner oder gleich 0,3 mrad. Dies ist erheblich kleiner als der typische Keilwinkel in herkömmlichen statischen HUDs (etwa 0,5 mrad). Mit dem maximalen Keilwinkel wird der größte Keilwinkel bezeichnet, der in der Zwischenschicht auftritt, wobei eventuelle Extremwerte an den Kanten zu vernachlässigen sind.

Die erfindungsgemäße Windschutzscheibe weist im HUD-Bereich einen vertikalen Krümmungsradius von mindestens 7 m auf. Damit ist gemeint, dass im HUD-Bereich nur vertikale Krümmungsradien auftreten, welche größer oder gleich 7 m sind. Der vertikale Krümmungsradius bezieht sich dabei auf die Krümmung in der vertikalen Dimension der Scheibe zwischen Oberkante und Unterkante. Vertikal heißt senkrecht zur Oberkante in Richtung zur Unterkante, wobei die Oberkante, wenn sie von einer Geraden abweicht, als eine gerade Verbindungslinie zwischen den Ecken der Oberkante zu denken ist. Große Krümmungsradien entsprechen einer schwachen Krümmung, kleine Krümmungsradien einer starken Krümmung der Scheibe.

Der Erfindung liegt die überraschende Erkenntnis zugrunde, dass die vergrößerte Projektionsdistanz des kontaktanalogen HUDs im Vergleich zum statischen HUD in Verbindung mit einer nicht zu starken Krümmung der Scheibe im HUD-Bereich gewährleistet, dass bei einem geringen Keilwinkel Hauptbild und Geisterbild wirksam überlagert werden. Bei Projektionsdistanzen ab 5 m und Krümmungsradien von mindestens 6 m sind Keilwinkel von lediglich höchstens 0,3 mrad erforderlich. Die Erfindung ermöglicht also die Verwendung von thermoplastischen Folien mit nur geringen Keilwinkeln, welche kostengünstiger und einfacher herzustellen sind als Folien mit größeren Keilwinkeln. Solche Folien können nämlich durch Recken einer Folie mit konstanter Dicke gewonnen werden statt durch Extrusion.

Durch Brechung und Reflexion an den verschiedenen Oberflächen des Verbundglases können in Transmission Doppelbilder auftreten - Objekte, welche durch das Verbundglas betrachtet werden, erscheinen dabei doppelt. Dieser Effekt kann durch auf das HUD optimierte Keilfolien mit großen Keilwinkeln sogar verstärkt werden. Die Erfindung ermöglicht die Verwendung sehr geringer Keilwinkel, wodurch die Doppelbildproblematik in Transmission vermindert wird. Dies ist ein weiterer wichtiger Vorteil der Erfindung.

Neben der Projektionsdistanz und der Scheibenkrümmung haben weitere Faktoren Einfluss auf den erforderlichen Keilwinkel, darunter die Scheibendicke sowie der Einbauwinkel der Windschutzscheibe. Bei geeigneter Konzeption des HUDs können noch deutlich geringere Keilwinkel ausreichend sein. In einer bevorzugten Ausgestaltung beträgt der maximale Keilwinkel kleiner oder gleich 0,2 mrad, besonders bevorzugt kleiner oder gleich 0,15 mrad, ganz besonders bevorzugt kleiner oder gleich 0,1 mrad. Je kleiner der Keilwinkel, desto einfacher ist die Zwischenschicht herzustellen, und desto weniger stark ausgeprägt ist die Problematik der Doppelbilder in Transmission.

Erfindungsgemäß beträgt der vertikale Krümmungsradius im HUD-Bereich mindestens 7 m, bevorzugt von 7 m bis 9 m, besonders bevorzugt von 7 m bis 8 m. Damit werden besonders gute Ergebnisse erzielt.

Die vertikalen Krümmungsradien der gesamten Windschutzscheibe liegen bevorzugt im Bereich von 1 m bis 20 m, besonders bevorzugt 2 m bis 15 m, insbesondere 3 m bis 13 m.

Die Richtungsangabe "von unten nach oben" bezeichnet die Richtung von Unterkante zu Oberkante. Erfindungsgemäß liegen komplexere Dickenprofile vor, bei denen der Keilwinkel von unten nach oben nicht-linear veränderlich (das heißt im vertikalen Verlauf ortsabhängig) ist.

Die Dicke der Zwischenschicht kann in horizontalen Schnitten (das heißt Schnitte etwa parallel zu Oberkante und Unterkante) konstant sein. Dann ist das Dickenprofil über die Breite des Verbundglases konstant. Die Dicke kann aber auch in horizontalen Schnitten veränderlich sein. Dann ist die Dicke nicht nur im vertikalen, sondern auch im horizontalen Verlauf veränderlich.

Die Zwischenschicht ist durch mindestens eine thermoplastische Folie ausgebildet. Erfindungsgemäß ist der Keilwinkel durch Recken in der Folie erzeugt. Die keilförmige Folie ist nicht extrudiert, sondern ursprünglich als herkömmliche Folie mit im Wesentlichen konstanter Dicke bereitgestellt und durch Recken so umgeformt, dass sie den gewünschten Keilwinkel aufweist. Dies ist einfacher und kostengünstiger als die Herstellung durch Extrusion. Der Fachmann erkennt nachträglich, ob ein Keilwinkel durch Recken oder durch Extrusion ausgebildet ist, insbesondere am typischen Dickenverlauf in der Nähe der Unterkante und/oder Oberkante.

Der HUD-Bereich ist bei einem kontaktanalogen HUD typischerweise größer als bei einem klassischen statischen HUD. In einer bevorzugten Ausgestaltung beträgt die Fläche des erfindungsgemäßen HUD-Bereichs mindestens 7 % der Fläche der Windschutzscheibe, besonders bevorzugt mindestens 8 %. Die Fläche des HUD-Bereichs eines statischen HUDs beträgt typischerweise höchstens 4-5 % der Fläche der Windschutzscheibe. Beispielsweise beträgt die Fläche des HUD-Bereichs von 40 000 mm² bis 125 000 mm².

Der Einbauwinkel der Windschutzscheibe liegt typischerweise im Bereich von 55° bis 75° zur Horizontalen, insbesondere von 58° bis 72°. Bei diesen Einbauwinkeln sind die erfindungsgemäßen Keilwinkel ohne Probleme realisierbar. In einer besonders vorteilhaften Ausgestaltung beträgt der Einbauwinkel von 60° bis 68° zur Horizontalen, bevorzugt 63° bis 67°. Damit können besonders kleine Keilwinkel der Zwischenschicht erreicht werden.

Der Einstrahlwinkel des Mittenstrahls an der Windschutzscheibe liegt vorzugsweise im Bereich von 50° bis 75°, besonders bevorzugt im Bereich von 60° bis 70° und beträgt beispielsweise 65°. Der Einstrahlwinkel bemisst sich zur Richtung der Normalen auf die Windschutzscheibe.

Für herkömmliche Windschutzscheiben sind Dicken der Einzelscheiben im Bereich 1 mm bis 5 mm, insbesondere 1,2 mm bis 3 mm üblich. Erfindungsgemäß weist zumindest eine der Einzelscheiben der Windschutzscheibe eine geringere Dicke auf. Neben der Gewichtsersparnis hat dies den Vorteil, dass zur Kompensation des Geisterbilds ein noch geringerer Keilwinkel erforderlich ist, weil die reflektierenden Oberflächen näher beieinander liegen. Dadurch sind Hauptbild und Geisterbild weniger stark zueinander verschoben, sodass sie mit einem geringeren Keilwinkel in Deckung gebracht werden können.

Die Dicke der Innenscheibe beträgt erfindungsgemäß von 0,3 mm bis 1,1 mm, bevorzugt von 0,5 mm bis 0,9 mm und insbesondere von 0,6 mm bis 0,8 mm.

Die Dicke der Außenscheibe beträgt erfindungsgemäß von 1,2 mm bis 2,0 mm, besonders bevorzugt von 1,4 mm bis 1,8 mm, ganz besonders bevorzugt von 1,5 mm bis 1,7 mm. Mit diesen Dicken sind die Verbundgläser ausreichend stabil, um als Fahrzeugverglasung verwendet zu werden. Eine asymmetrische Kombination aus dickerer Außenscheibe und dünnerer Innenscheibe hat sich zur Steigerung von Steinschlagfestigkeit und Bruchfestigkeit bewährt.

Die Außenscheibe und die Innenscheibe können nicht-vorgespannte Scheiben sein. Alternativ kann aber die dünne Innenscheibe eine chemisch vorgespannte Scheibe sein. Beim chemischen Vorspannen wird durch Ionenaustausch die chemische Zusammensetzung des Glases im Bereich der Oberfläche verändert. Insbesondere ist die dickere Außenscheibe eine nicht-vorgespannte Scheibe und die dünnere Innenscheibe eine chemisch vorgespannte Scheibe.

Die Innenscheibe und die Außenscheibe bestehen bevorzugt aus Glas, besonders bevorzugt aus Kalk-Natron-Glas, was sich für Fenstergläser bewährt hat. Die Scheiben können aber auch aus anderen Glassorten bestehen, beispielsweise Borosilikatglas oder Aluminosilikatglas. Die Scheiben können grundsätzlich alternativ aus Kunststoff gefertigt sein, insbesondere Polycarbonat oder PMMA.

Die Außenscheibe enthält bevorzugt Kalk-Natron-Glas, die Innenscheibe Kalk-Natron-Glas oder Aluminosilikatglas. Besonders bevorzugt besteht die Außenscheibe aus nicht-vorgespanntem Kalk-Natron-Glas und die Innenscheibe entweder ebenfalls aus nicht-vorgespanntem Kalk-Natron-Glas oder aus chemisch vorgespanntem Aluminosilikatglas. Aluminosilikat lässt sich effektiver chemisch vorspannen als Kalk-Natron-Glas.

Die Außenscheibe, die Innenscheibe und die thermoplastische Zwischenschicht können klar und farblos, aber auch getönt oder gefärbt sein. Die Gesamttransmission durch das Verbundglas beträgt in einer bevorzugten Ausgestaltung größer 70%, insbesondere wenn das Verbundglas eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Neben der vertikalen Krümmung zeichnet sich die Windschutzscheibe auch durch eine horizontale Krümmung aus. Diese hat jedoch einen untergeordneten Einfluss auf die Geisterbild-Problematik und ist daher nicht erfindungswesentlich. Sie kann fachüblich gewählt werden.

Die Zwischenschicht weist bevorzugt eine Mindestdicke von 0,2 mm bis 2 mm auf, besonders bevorzugt von 0,3 mm bis 1 mm, ganz besonders bevorzugt von 0,5 mm bis 0,9 mm. Mit Mindestdicke wird die Dicke an der dünnsten Stelle der Zwischenschicht bezeichnet.

Verbundgläser mit dünneren Zwischenschichten weisen häufig eine zu geringe Stabilität auf, um als Fahrzeugscheibe verwendet werden zu können. Thermoplastische Folien, insbesondere PVB-Folien, werden in der Standarddicke 0,76 mm vertrieben. Aus diesen Folien lassen sich durch Recken vorteilhaft erfindungsgemäße Keilwinkel einbringen. Da die erfindungsgemäßen Keilwinkel sehr klein sind, wird die Folie lokal nicht so stark verdünnt, dass Probleme mit der Stabilität des Verbundglases auftreten.

Die Zwischenschicht enthält bevorzugt zumindest Polyvinylbutyral (PVB), Ethylenvinylacetat (EVA), Polyurethan (PU) oder Gemische oder Copolymere oder Derivate davon, besonders bevorzugt PVB. Die Zwischenschicht ist in einer bevorzugten Ausgestaltung aus einer PVB-Folie ausgebildet.

Die Zwischenschicht kann durch eine einzelne Folie ausgebildet sein oder auch durch mehr als eine Folie. In letzterem Fall muss mindestens eine der Folien mit dem Keilwinkel ausgebildet sein. Die Zwischenschicht kann auch aus einer sogenannten akustischen Folie ausgebildet sein, welche eine geräuschdämpfende Wirkung hat. Solche Folien bestehen typischerweise aus mindestens drei Lagen, wobei die mittlere Lage eine höhere Plastizität oder Elastizität aufweist als die sie umgebenden äußeren Lagen, beispielsweise infolge eines höheren Anteils an Weichmachern. Die Verwendung einer solchen geräuschdämpfenden, mehrlagigen Folie dient bevorzugt der Verbesserung des akustischen Komforts. Dies ist insbesondere dann vorteilhaft, wenn die Außen- und/oder Innenscheibe mit geringer Dicke ausgebildet sind und infolgedessen Geräusche weniger gut abschirmen können.

Die erfindungsgemäße Windschutzscheibe kann eine funktionelle Beschichtung aufweisen, beispielweise eine IR-reflektierende oder absorbierende Beschichtung, eine UV-reflektierende oder absorbierende Beschichtung, eine farbgebende Beschichtung, eine Beschichtung niedriger Emissivität, eine heizbare Beschichtung, eine Beschichtung mit Antennenfunktion, eine splitterbindende Beschichtung oder eine Beschichtung zur Abschirmung von elektromagnetischer Strahlung. Die funktionelle Beschichtung kann auf einer Oberfläche der Außenscheibe oder der Innenscheibe angeordnet sein, oder auch auf einer Einlagefolie in der Zwischenschicht, die beispielsweise aus Polyethylenterephthalat (PET) besteht.

Die Erfindung umfasst außerdem ein Verfahren zur Herstellung einer Projektionsanordnung für ein HUD, welche wie oben beschrieben ausgebildet ist, wobei die Projektionsanordnung umfasst:
- eine Fahrzeug-Windschutzscheibe, enthaltend eine Außenscheibe und eine Innenscheibe, die über eine thermoplastische Zwischenschicht miteinander verbunden sind, mit einer Oberkante und einer Unterkante und einem HUD-Bereich, wobei die Dicke der thermoplastischen Zwischenschicht im vertikalen Verlauf zwischen der Oberkante und der Unterkante zumindest im HUD-Bereich veränderlich ist mit einem Keilwinkel kleiner oder gleich 0,3 mrad; und
- einen Projektor, der auf den HUD-Bereich gerichtet ist und ein virtuelles Bild erzeugt mit einer Projektionsdistanz von mindestens 5 m.

Das erfindungsgemäße Verfahren umfasst mindestens die folgenden Verfahrensschritte:
(a) Ermittlung des HUD-Bereichs der Windschutzscheibe;
(b) Erstellung eines Profils des vertikalen Krümmungsradius, wobei der vertikale Krümmungsradius im HUD-Bereich mindestens 7 m beträgt;
(c) Herstellen der Windschutzscheibe mit dem Keilwinkel und dem ermittelten vertikalen Krümmungsradius;
(d) relatives Anordnen von Windschutzscheibe und Projektor, wobei die Projektionsanordnung entsteht.

Der besondere Vorteil des Verfahrens liegt darin, dass bei der Konzeption der Projektionsanordnung das Krümmungsprofil der Windschutzscheibe einbezogen wird. Die vorstehend mit Bezug auf das Verbundglas beschriebenen bevorzugten Ausführungen gelten entsprechend für das erfindungsgemäße Verfahren.

Die Dicken der Scheiben sowie die Einbaulage stehen typischerweise bei der Konzeption des HUDs bereits fest. Auf dieser Grundlage kann auch theoretisch ein Keilwinkel bestimmt werden, sodass Geisterbilder optimal minimiert werden. Die Ermittlung des Keilwinkelverlaufs erfolgt durch fachübliche Simulationen. Ferner muss die relative Anordnung zwischen Windschutzscheibe und Projektor festgelegt sein. Da das Krümmungsprofil auch Auswirkungen auf das Geisterbild haben kann, kann zu diesem Zeitpunkt eine Anpassung des Keilwinkels nötig sein. Die endgültige Bestimmung der Scheibengeometrie mit Keilwinkel und Krümmungsprofil kann iterativ erfolgen, bis die Geisterproblematik minimiert ist. Die bislang beschriebenen Schritte erfolgen typischerweise in der Konzeptionsphase, typischerweise anhand der CAD-Daten des Fahrzeugs. Nachdem die endgültige Scheibengeometrie festgelegt wurde, kann die Scheibe hergestellt werden.

Die thermoplastische Zwischenschicht wird als mindestens eine Folie bereitgestellt. In einer bevorzugten Ausführung ist dies eine herkömmliche thermoplastische Folie, insbesondere PVB-Folie, mit (im Ausgangszustand) im Wesentlichen konstanter Dicke. Die veränderliche Dicke mit dem erfindungsgemäßen Keilwinkel wird durch Recken der Folie, das heißt mechanische Krafteinwirkung durch geeignetes Ziehen, eingebracht. Die erfindungsgemäßen geringen Keilwinkel können durch Recken erreicht werden, was deutlich kostengünstiger ist als eine Herstellung der Keilfolie durch Extrusion.

Die Außenscheibe und die Innenscheibe werden vor der Lamination einem Biegeprozess unterzogen entsprechend dem ermittelten Krümmungsprofil. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

Soll die Innenscheibe mit einer chemischen Vorspannung versehen werden, so wird die Scheibe nach dem Biegen vorteilhafterweise langsam abgekühlt, bevorzugt bis zur Abkühlung auf eine Temperatur von 400 °C mit einer Abkühlrate von 0,05 °C/sec bis 0,5 °C/sec, um thermische Spannungen zu vermeiden. Es kann danach weiter abgekühlt werden, auch mit höheren Abkühlraten, weil unterhalb von 400 °C die Gefahr der Erzeugung thermischer Spannungen gering ist. Das chemische Vorspannen erfolgt bevorzugt bei einer Temperatur von 300 °C bis 600 °C, besonders bevorzugt von 400 °C bis 500 °C. Die Scheibe wird dabei mit einer Salzschmelze behandelt, beispielsweise in die Salzschmelze eingetaucht. Während der Behandlung werden insbesondere Natrium-Ionen des Glases durch größere Ionen, insbesondere größere Alkali-Ionen ausgetauscht, wobei die gewünschten Oberflächen-Druckspannungen entstehen. Die Salzschmelze ist bevorzugt die Schmelze eines Kaliumsalzes, besonders bevorzugt Kaliumnitrat (KNO₃) oder Kaliumsulfat (KSO₄), ganz besonders bevorzugt Kaliumnitrat (KNO₃). Übliche Zeiten für die Dauer der Behandlung betragen von 2 Stunden bis 48 Stunden. Nach der Behandlung mit der Salzschmelze wird die Scheibe auf Raumtemperatur abgekühlt. Anschließend wird die Scheibe gereinigt, bevorzugt mit Schwefelsäure (H₂SO₄).

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Anschließend werden Windschutzscheibe und Projektor relativ zueinander angeordnet, typischerweise durch Einbau von Windschutzscheibe und Projektor in die Fahrzeugkarosserie. So entsteht die erfindungsgemäße Projektionsanordnung.

Die erfindungsgemäße Projektionsanordnung wird bevorzugt in einem Fahrzeug als Head-Up-Display (HUD) verwendet, besonders bevorzugt in einem Kraftfahrzeug, ganz besonders bevorzugt in einem Personenkraftwagen.

Gezeigt, aber in den Patentansprüchen nicht beansprucht, ist außerdem die Verwendung einer Fahrzeug-Windschutzscheibe, umfassend eine Außenscheibe und eine Innenscheibe, die über eine thermoplastische Zwischenschicht miteinander verbunden sind, wobei die Dicke der thermoplastischen Zwischenschicht im vertikalen Verlauf veränderlich ist mit einem Keilwinkel von kleiner oder gleich 0,3 mrad, die einen Bereich aufweist, in dem der vertikale Krümmungsradius mindestens 6 m beträgt, in einer Projektionsanordnung für ein Head-Up-Display mit einer Projektionsdistanz von mindestens 5 m, wobei der HUD-Bereich der Windschutzscheibe vollständig innerhalb des besagten Bereichs mit dem vertikalen Krümmungsradius von mindestens 6 m angeordnet ist.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf die Windschutzscheibe einer Projektionsanordnung,
- Fig. 2: einen Querschnitt durch eine Projektionsanordnung und
- Fig. 3: ein Flussdiagramm einer Ausführungsform des erfindungsgemäßen Verfahrens.

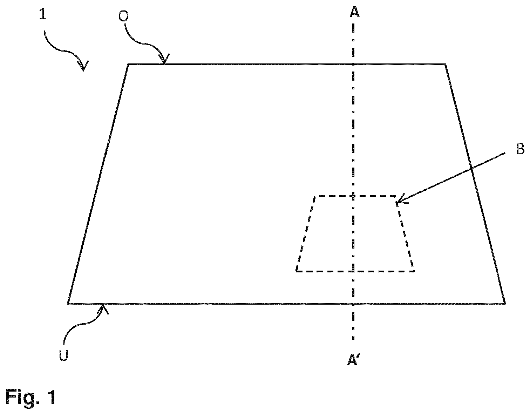

Fig. 1 zeigt eine Draufsicht auf eine Windschutzscheibe 1 einer Projektionsanordnung. Die Windschutzscheibe 1 hat eine Oberkante O, eine Unterkante U und zwei diese verbindende Seitenkanten. Die Oberkante O weist in Einbaulage nach oben zum Fahrzeugdach (Dachkante), die Unterkante U nach unten zum Motorraum (Motorkante). Die Windschutzscheibe 1 weist einen HUD-Bereich B auf, welcher in Einbaulage vom HUD-Projektor bestrahlbar ist und im Betrieb bestrahlt wird.

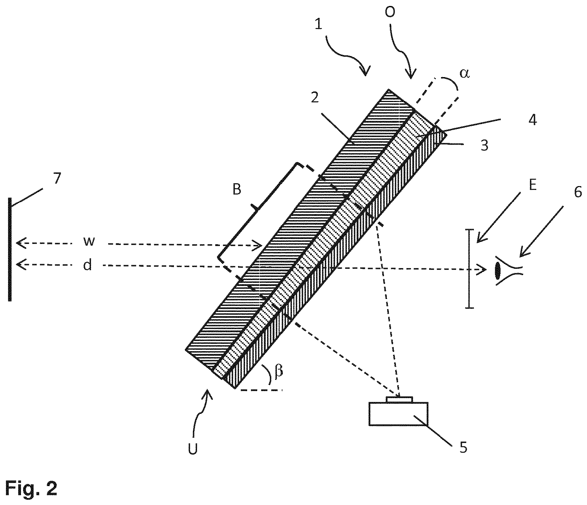

Fig. 2 zeigt einen Querschnitt durch eine Projektionsanordnung, umfassend die Windschutzscheibe 1 aus Fig. 1 sowie einen HUD-Projektor 5. Die Windschutzscheibe 1 ist durch die Schnittlinie A-A' geschnitten. Die Windschutzscheibe 1 besteht aus einer Außenscheibe 2 und einer Innenscheibe 3, die über eine thermoplastische Zwischenschicht 4 miteinander verbunden sind. Die Windschutzscheibe 1 trennt den Fahrzeuginnenraum von der äußeren Umgebung, wobei die Außenscheibe 2 in Einbaulage der äußeren Umgebung zugewandt ist, die Innenscheibe 3 dem Fahrzeuginnenraum. Der Einbauwinkel β zur Horizontalen beträgt beispielsweise 65°.

Die Außenscheibe 2 und die Innenscheibe 3 bestehen beispielsweise aus nichtvorgespanntem Kalk-Natron-Glas. Die Außenscheibe 2 weist beispielsweise eine Dicke von 2,1 mm auf und die Innenscheibe 3 eine Dicke von 1,6 mm. Diese Scheiben sind für Windschutzscheiben gebräuchlich. Die Dicke der Zwischenschicht 4 nimmt im vertikalen Verlauf von der Unterkante U zur Oberkante O stetig zu mit einem im Wesentlichen konstanten Keilwinkel α zwischen den beiden Oberflächen. Die Zwischenschicht 4 ist aus einer einzelnen Folie aus PVB ausgebildet. Die Dicke der Zwischenschicht 4 an der Oberkante O beträgt beispielsweise 1,0 mm und an der Unterkante U beispielsweise 0,76 mm. Durch die keilförmige Ausbildung der Zwischenschicht 4 werden die beiden Bilder, die durch Reflexion des Projektorbildes an den beiden von der Zwischenschicht 4 abgewandten Oberflächen der Außenscheibe 2 und der Innenscheibe 3 erzeugt werden, miteinander überlagert. Störende Geisterbilder treten daher in geringerem Maße auf.

Der Projektor 5 ist auf den HUD-Bereich B gerichtet. In diesem Bereich sollen Bilder durch den Projektor 5 erzeugt werden. Das Projektorbild wird von der Windschutzscheibe 1 in Richtung des Betrachters 6 (Fahrzeugfahrer) reflektiert. Dadurch entsteht das virtuelle Bild 7, welches der im Fahrzeug befindliche Betrachter 6 von ihm aus gesehen hinter der Windschutzscheibe 1 wahrnimmt. Der Abstand zwischen dem Betrachter 6 und dem virtuellen Bild 7 wird als Projektionsdistanz d bezeichnet. Der Abstand zwischen der Windschutzscheibe 1 und dem virtuellen Bild 7 wird als Bildweite w bezeichnet.

Die Projektionsanordnung ist ein sogenanntes kontaktanaloges HUD oder *Augmented Reality-HUD,* welches sich durch eine große Projektionsdistanz d von beispielsweise 10 m auszeichnet. Dies ermöglicht die Einbeziehung der Umgebung in die optische Darstellung, wodurch beispielsweise die zu wählende Fahrspur als Navigationshinweis für den Betrachter 6 scheinbar direkt auf die Fahrbahn projiziert werden kann. Neben der größeren Projektionsdistanz d unterscheidet sich das kontaktanaloge HUD vom klassischen HUD auch durch einen größeren HUD-Bereich B, dessen Fläche beispielsweise 9 % der Fläche der Windschutzscheibe 1 beträgt.

Der Bereich, innerhalb dessen sich die Augen des Betrachters 6 befinden müssen, um das virtuelle Bild wahrzunehmen, wird als Eyeboxfenster bezeichnet. Das Eyeboxfenster ist durch Spiegel im Projektor 5 vertikal verstellbar, um das HUD an Betrachter 6 unterschiedlicher Körpergröße und Sitzposition anpassen zu können. Der gesamte zugängliche Bereich, innerhalb dessen das Eyebox-Fenster verschoben werden kann, wird als Eyebox E bezeichnet.

Die Windschutzscheibe 1 weist innerhalb des HUD-Bereichs B vertikale Krümmungsradien R von mindestens 6 m auf, beispielsweise im Bereich von 8 m bis 9 m. Die Erfinder haben erkannt, dass die große Projektionsdistanz d in Verbindung mit den großen Krümmungsradien R im HUD-Bereich B nur einen sehr geringen Keilwinkel α erforderlich macht, um Geisterbilder zu vermeiden. Der Keilwinkel α beträgt beispielsweise 0,27 mrad. Ein solcher geringer Keilwinkel α kann durch Recken in einer herkömmlichen PVB-Folie mit im Wesentlichen konstanter Dicke von beispielsweise 0,76 mm erzeugt werden. Die Herstellung der Windschutzscheibe 1 wird dadurch wesentlich vereinfacht und kostengünstiger gestaltet als bei Verwendung einer durch Extrusion hergestellten Keilfolie.

Noch kleinere Keilwinkel α können erreicht werden beispielsweise durch eine noch größere Projektionsdistanz d oder durch die Verwendung dünnerer Gläser für die Außenscheibe 2 und/oder die Innenscheibe 3. In einer alternativen Ausgestaltung sind die Außenscheibe 2 und die Innenscheibe 3 aus Dünnglas ausgebildet und weisen beispielsweise Dicken von 1,6 mm für die Außenscheibe 2 und 0,7 mm für die Innenscheibe 3 auf.

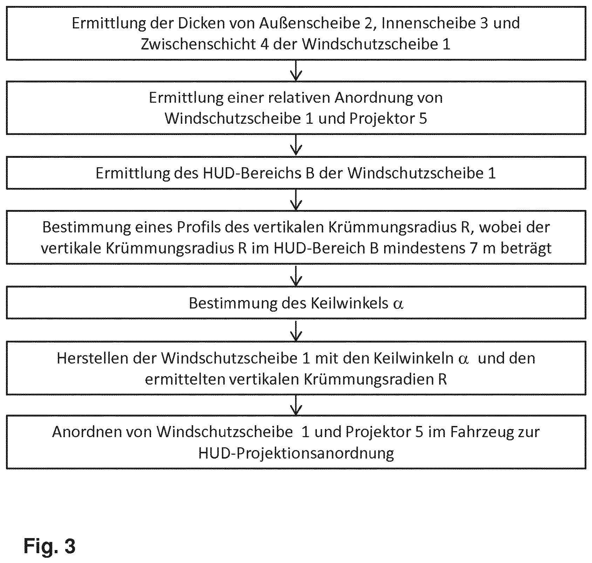

Fig. 3 zeigt ein Flussdiagramm eines Ausführungsbeispiels des erfindungsgemäßen Verfahrens zur Herstellung einer Projektionsanordnung für ein Head-Up-Display. Aus den Konzeptionsdaten (CAD) des Fahrzeugs werden die Dicken der Außenscheibe 2, der Innenscheibe 3 und der Zwischenschicht 4 sowie die relative Anordnung von Windschutzscheibe 1 und Projektor 5 ermittelt. Aus der relativen Anordnung ergibt sich neben dem Einstrahlwinkel auch der HUD-Bereich B der Windschutzscheibe 1, welcher dem bestrahlten beziehungsweise bestrahlbaren Bereich entspricht. Ist der HUD-Bereich B ermittelt, so wird das Krümmungsprofil der Scheibe bestimmt. Erfindungsgemäß dürfen dabei im HUD-Bereich B nur vertikale Krümmungsradien R von mindestens 7 m auftreten. Die vertikalen Krümmungsradien R der übrigen Scheibe sowie die horizontalen Krümmungsradien können frei gewählt werden und sind in der Regel von Fahrzeugherstellern vorgegeben (Fahrzeugdesign). Nun wird das theoretisch zu erwartende Geisterbild berechnet und der Keilwinkel α der Zwischenschicht 4 so bestimmt, dass Hauptbild und Geisterbild überlagert werden. Die Gestaltung der Windschutzscheibe 1 ist damit festgelegt und sie wird mit den ermittelten Werten für die vertikalen Krümmungsradien R sowie dem Keilwinkel α hergestellt mit fachüblichen Methoden. Die erfindungsgemäßen geringen Keilwinkel α können besonders vorteilhaft durch Recken einer Standardfolie erreicht werden. Anschließend werden Windschutzscheibe 1 und Projektor 5 relativ zueinander angeordnet, wobei die Projektionsanordnung entsteht. Dies geschieht typischerweise durch Einbau von Windschutzscheibe 1 und Projektor 5 in die Fahrzeugkarosserie.

### Beispiele

Die folgende Tabelle enthält Ergebnisse von Simulationen. Für unterschiedliche Dicken der Außenscheibe 2 und der Innenscheibe 3, unterschiedliche Projektionsdistanzen d und unterschiedliche minimale vertikale Krümmungsradien R im HUD-Bereich B wurden die Keilwinkel α ermittelt, welche für eine Vermeidung von Geisterbildern erforderlich sind. Die relative Anordnung von Windschutzscheibe 1 und Projektor 5 wurde in allen Beispielen als konstant angenommen.

| Dicke (2):(3) /mm | d /m | minimaler R /m | Einbauwinkel β /° | Keilwinkel α /mrad |
|---|---|---|---|---|
| 2,1:2,1 | 10 | 6 | 62,44 | 0,30 |
| 2,1:1,6 | 10 | 6 | 62,44 | 0,27 |
| 1,8:1,4 | 10 | 6 | 62,44 | 0,24 |
| 1,6:1,2 | 10 | 6 | 62,44 | 0,21 |
| 1,6:0,7 | 10 | 6 | 62,44 | 0,18 |
| 2,1:2,1 | 10 | 9,6 | 62,2 | 0,19 |
| 2,1:1,6 | 10 | 9,6 | 62,2 | 0,17 |
| 1,8:1,4 | 10 | 9,6 | 62,2 | 0,15 |
| 1,6:1,2 | 10 | 9,6 | 62,2 | 0,13 |
| 1,6:0,7 | 10 | 9,6 | 62,2 | 0,11 |
| 2,1:2,1 | 13 | 6 | 62,44 | 0,23 |
| 1,8:1,4 | 13 | 6 | 62,44 | 0,17 |
| | | | | |

| Vergleichsbeispiele | | | | |
|---|---|---|---|---|
| 2,1:2,1 | 4 | 6 | 62,44 | 0,43 |
| 1,8:1,4 | 4 | 6 | 62,44 | 0,35 |
| 2,1:2,1 | 4 | 9,6 | 62,2 | 0,45 |
| 1,8:1,4 | 4 | 9,6 | 62,2 | 0,36 |

In den Beispielen der ersten zwölf Zeilen (mit den Krümmungsradien R und den Projektionsdistanzen d) treten erfindungsgemäße Keilwinkel α kleiner 0,3 mrad auf. Dass bei kontaktanalogen HUDs durch die geeignete Einstellung der Krümmungsradien der Windschutzscheibe 1 so geringe Keilwinkel α erreicht werden können, war für den Fachmann unerwartet und überraschend.

Die letzten vier Zeilen beschreiben Vergleichsbeispiele, bei denen die Projektionsdistanz auf unter 5 m verkürzt ist. Dort treten Keilwinkel größer 0,3 mrad auf.

### Bezugszeichenliste:

- (1): Windschutzscheibe
- (2): Außenscheibe
- (3): Innenscheibe
- (4): thermoplastische Zwischenschicht

- (5): Projektor
- (6): Betrachter / Fahrzeugfahrer
- (7): virtuelles Bild

- (O): Oberkante der Windschutzscheibe 1
- (U): Unterkante der Windschutzscheibe 1

- (B): HUD-Bereich der Windschutzscheibe 1

- α: Keilwinkel der Zwischenschicht 4
- β: Einbauwinkel von 1 zur Horizontalen
- R: vertikaler Krümmungsradius der Windschutzscheibe 1
- d: Projektionsdistanz / Abstand von 6 und 7
- w: Bildweite / Abstand von 1 und 7

- (E): Eyebox

- A-A': vertikale Schnittlinie

## Patentansprüche

1. Projektionsanordnung für ein Head-Up-Display (HUD), mindestens umfassend
- eine Fahrzeug-Windschutzscheibe (1), umfassend eine Außenscheibe (2) und eine Innenscheibe (3), die über eine thermoplastische Zwischenschicht (4) miteinander verbunden sind, mit einer Oberkante (O) und einer Unterkante (U) und einem von einem Projektor (5) bestrahlbaren HUD-Bereich (B), wobei die Dicke der thermoplastischen Zwischenschicht (4) im vertikalen Verlauf zwischen der Oberkante (O) und der Unterkante (U) zumindest im HUD-Bereich (B) veränderlich ist mit einem Keilwinkel (α), wobei die Fahrzeug-Windschutzscheibe (1) einen Einbauwinkel im Bereich von 55° bis 75° aufweist, und wobei die Außenscheibe (2) und die Innenscheibe (3) jeweils eine Dicke von maximal 5 mm aufweisen; und
- einen Projektor (5), der auf den HUD-Bereich (B) gerichtet ist, wobei durch Reflexion eines Projektorbilds an der Fahrzeug-Windschutzscheibe (1) ein virtuelles Bild (7) erzeugt wird, das ein Betrachter (6) wahrnehmen kann, mit einer Projektionsdistanz (d) von mindestens 5 m, wobei durch Reflexion an den beiden von der Zwischenschicht (4) abgewandten Oberflächen der Außenscheibe (2) und der Innenscheibe (3) das virtuelle Bild (7) und ein Geisterbild erzeugt werden,
wobei für eine Überlagerung des virtuellen Bilds und des Geisterbilds, sodass störende Geisterbilder in geringerem Maße auftreten, die Windschutzscheibe (1) im HUD-Bereich (B) einen vertikalen Krümmungsradius (R) von mindestens 7 m aufweist und wobei der maximale Keilwinkel (α) größer 0 mrad und kleiner oder gleich 0,3 mrad beträgt, wobei der Keilwinkel (α) von der Unterkante (U) zur Oberkante (O) nicht-linear veränderlich ist, wobei die Zwischenschicht (4) durch mindestens eine thermoplastische Folie ausgebildet ist, in welcher der Keilwinkel (α) durch Recken erzeugt ist,
wobei die Dicke der Innenscheibe (3) von 0,3 mm bis 1,1 mm beträgt und wobei die Dicke der Außenscheibe (2) von 1,2 mm bis 2,0 mm beträgt.

2. Projektionsanordnung nach Anspruch 1, wobei der maximale Keilwinkel (α) kleiner oder gleich 0,2 mrad beträgt, bevorzugt kleiner oder gleich 0,15 mrad, besonders bevorzugt kleiner oder gleich 0,1 mrad.

3. Projektionsanordnung nach einem der Ansprüche 1 oder 2, wobei der vertikale Krümmungsradius (R) im HUD-Bereich (B) von 7 m bis 9 m beträgt.

4. Projektionsanordnung nach einem der Ansprüche 1 bis 3, wobei die Dicke der Innenscheibe (3) von 0,5 mm bis 0,9 mm beträgt, bevorzugt von 0,6 mm bis 0,8 mm und wobei die Dicke der Außenscheibe (2) von 1,4 mm bis 1,8 mm beträgt.

5. Projektionsanordnung nach Anspruch 4, wobei die Innenscheibe (3) eine chemisch vorgespannte Scheibe ist.

6. Projektionsanordnung nach einem der Ansprüche 1 bis 5, wobei die Zwischenschicht (4) eine Mindestdicke von 0,2 mm bis 2 mm, bevorzugt 0,3 mm bis 1 mm, besonders bevorzugt von 0,5 mm bis 0,9 mm aufweist.

7. Projektionsanordnung nach einem der Ansprüche 1 bis 6, wobei die Zwischenschicht (4) zumindest Polyvinylbutyral (PVB), Ethylenvinylacetat (EVA), Polyurethan (PU) oder Gemische oder Copolymere oder Derivate davon enthält.

8. Projektionsanordnung nach einem der Ansprüche 1 bis 7, wobei die Außenscheibe (2) Kalk-Natron-Glas enthält und wobei die Innenscheibe (3) Kalk-Natron-Glas oder Aluminosilikatglas enthält.

9. Projektionsanordnung nach einem der Ansprüche 1 bis 8, wobei die Zwischenschicht (4) als geräuschdämpfende, mehrlagige Folie ausgebildet ist.

10. Verfahren zur Herstellung einer Projektionsanordnung für ein Head-Up-Display (HUD) nach einem der Ansprüche 1 bis 9, umfassend
- eine Fahrzeug-Windschutzscheibe (1), enthaltend eine Außenscheibe (2) und eine Innenscheibe (3), die über eine thermoplastische Zwischenschicht (4) miteinander verbunden sind, mit einer Oberkante (O) und einer Unterkante (U) und einem von einem Projektor (5) bestrahlbaren HUD-Bereich (B), wobei die Dicke der thermoplastischen Zwischenschicht (4) im vertikalen Verlauf zwischen der Oberkante (O) und der Unterkante (U) zumindest im HUD-Bereich (B) veränderlich ist mit einem Keilwinkel (α) kleiner oder gleich 0,3 mrad, wobei der Keilwinkel (α) von der Unterkante (U) zur Oberkante (O) nicht-linear veränderlich ist; und
- einen Projektor (5), der auf den HUD-Bereich (B) gerichtet ist und ein virtuelles Bild (7) erzeugt mit einer Projektionsdistanz (d) von mindestens 5 m;
wobei das Verfahren mindestens die folgenden Verfahrensschritte umfasst:
(a) Ermittlung des HUD-Bereichs (B) der Windschutzscheibe (1);
(b) Erstellung eines Profils des vertikalen Krümmungsradius (R), wobei der vertikale Krümmungsradius (R) im HUD-Bereich (B) mindestens 7 m beträgt;
(c) Herstellen der Windschutzscheibe (1) mit dem Keilwinkel (α) und dem ermittelten vertikalen Krümmungsradius (R);
(d) relatives Anordnen von Windschutzscheibe (1) und Projektor (5), wobei die Projektionsanordnung entsteht,
wobei der Keilwinkel (α) durch Recken in eine thermoplastische Folie konstanter Dicke eingebracht wird.

## Claims

1. Projection arrangement for a head-up display (HUD), at least comprising
- a vehicle windshield (1), comprising an outer pane (2) and an inner pane (3), which are bonded to one another via a thermoplastic intermediate layer (4), with an upper edge (O) and a lower edge (U) and an HUD region (B) that can be irradiated by a projector (5), wherein the thickness of the thermoplastic intermediate layer (4) in the vertical course between the upper edge (O) and the lower edge (U) is variable at least in the HUD region (B) with a wedge angle (α), wherein the vehicle windshield (1) has an installation angle in the range from 55° to 75°, and wherein the outer pane (2) and the inner pane (3) have, in each case, a thickness of a maximum of 5 mm; and
- a projector (5), which is aimed at the HUD region (B), wherein a virtual image (7) is generated through reflection of a projector image on the vehicle windshield (1), which an observer (6) can perceive, with a projection distance (d) of at least 5 m, wherein through reflection on the two surfaces of the outer pane (2) and of the inner pane (3) turned away from the intermediate layer (4) the virtual image (7) and a ghost image are produced,
wherein, in order to coincide the virtual image and the ghost image so that disruptive ghost images occur to a lesser extent, the windshield (1) has in the HUD region (B) a vertical radius of curvature (R) of at least 7 m and wherein the maximum wedge angle (α) is greater than 0 mrad and less than or equal to 0.3 mrad, wherein the wedge angle (α) is non-linearly variable from the lower edge (U) to the upper edge (O), wherein the intermediate layer (4) is formed by at least one thermoplastic film, in which the wedge angle (α) is generated by stretching,
wherein the inner pane (3) has a thickness from 0.3 mm to 1.1 mm and wherein the thickness of the outer pane (2) is from 1.2 mm to 2.0 mm.

2. Projection arrangement according to claim 1, wherein the maximum wedge angle (α) is less than or equal to 0.2 mrad, preferably less than or equal to 0.15 mrad, particularly preferably less than or equal to 0.1 mrad.

3. Projection arrangement according to claim 1 or 2, wherein the vertical radius of curvature (R) in the HUD region (B) is from 7 m to 9 m.

4. Projection arrangement according to one of claims 1 through 3, wherein the inner pane (3) has a thickness from 0.5 mm to 0.9 mm, preferably from 0.6 mm to 0.8 mm and wherein the thickness of the outer pane (2) is from 1.4 mm to 1.8 mm.

5. Projection arrangement according to claim 4, wherein the inner pane (3) is a chemically tempered pane.

6. Projection arrangement according to one of claims 1 through 5, wherein the intermediate layer (4) has a minimum thickness from 0.2 mm to 2 mm, preferably 0.3 mm to 1 mm, particularly preferably from 0.5 mm to 0.9 mm.

7. Projection arrangement according to one of claims 1 through 6, wherein the intermediate layer (4) contains at least polyvinyl butyral (PVB), ethylene vinyl acetate (EVA), polyurethane (PU), or mixtures or copolymers or derivatives thereof.

8. Projection arrangement according to one of claims 1 through 7, wherein the outer pane (2) contains soda lime glass and wherein the inner pane (3) contains soda lime glass or aluminosilicate glass.

9. Projection arrangement according to one of claims 1 through 8, wherein the intermediate layer (4) is implemented as a noise-damping, multilayer film.

10. Method for producing a projection arrangement for a head-up display (HUD) according to one of claims 1 through 9, comprising
- a vehicle windshield (1), including an outer pane (2) and an inner pane (3), which are bonded to one another via a thermoplastic intermediate layer (4), with an upper edge (O) and a lower edge (U) and an HUD region (B) that can be irradiated by a projector (5), wherein the thickness of the thermoplastic intermediate layer (4) in the vertical course between the upper edge (O) and the lower edge (U) is variable at least in the HUD region (B) with a wedge angle (α) less than or equal to 0.3 mrad, wherein the wedge angle (α) is non-linearly variable from the lower edge (U) to the upper edge (O); and
- a projector (5), which is aimed at the HUD region (B) and generates a virtual image (7) with a projection distance (d) of at least 5 m;
wherein the method comprises at least the following process steps:
(a) Calculating the HUD region (B) of the windshield (1);
(b) Creating a profile of the vertical radius of curvature (R), wherein the vertical radius of curvature (R) in the HUD region (B) is at least 7 m;
(c) Producing the windshield (1) with the wedge angle (α) and the calculated vertical radius of curvature (R);
(d) relative arrangement of the windshield (1) and the projector (5), wherein the projection arrangement is created,
wherein the wedge angle (α) is introduced into a thermoplastic film of constant thickness by stretching.

## Revendications

1. Agencement de projection pour un affichage tête haute (HUD), comprenant au moins
- un pare-brise de véhicule (1), comprenant une vitre externe (2) et une vitre interne (3), qui sont reliées l'une à l'autre par une couche intermédiaire thermoplastique (4), et présentant un bord supérieur (O), un bord inférieur (U) et une zone HUD (B) pouvant être irradiée par un projecteur (5), dans lequel l'épaisseur de la couche intermédiaire thermoplastique (4) est variable, au moins dans la zone HUD (B), dans la direction verticale entre le bord supérieur (O) et le bord inférieur (U), avec un angle de coin (α), dans lequel le pare-brise de véhicule (1) présente un angle d'installation compris entre 55° et 75°, et dans lequel la vitre externe (2) et la vitre interne (3) présentent chacune une épaisseur maximale de 5 mm; et
- un projecteur (5) orienté vers la zone HUD (B), dans lequel une image virtuelle (7) est générée par réflexion d'une image du projecteur sur le pare-brise de véhicule (1), ladite image virtuelle (7) pouvant être perçue par un observateur (6) et la distance de projection (d) étant d'au moins 5 m, et dans lequel l'image virtuelle (7) et une image fantôme sont générées par réflexion sur les deux surfaces de la vitre externe (2) et de la vitre interne (3) tournées à l'opposé de la couche intermédiaire (4),
dans lequel, afin de superposer l'image virtuelle et l'image fantôme de sorte que les images fantômes gênantes apparaissent dans une moindre mesure, le pare-brise (1) présente dans la zone HUD (B) un rayon de courbure vertical (R) d'au moins 7 m et dans lequel l'angle de coin (α) maximal est supérieur à 0 mrad et inférieur ou égal à 0,3 mrad, dans lequel l'angle de coin (α) varie de manière non linéaire du bord inférieur (U) au bord supérieur (O), dans lequel la couche intermédiaire (4) est formée d'au moins un film thermoplastique dans lequel l'angle de coin (α) est obtenu par étirage,
dans lequel la vitre interne (3) présente une épaisseur de 0,3 mm à 1,1 mm et dans lequel la vitre externe (2) présente une épaisseur de 1,2 mm à 2,0 mm.

2. Agencement de projection selon la revendication 1, dans lequel l'angle de coin (α) maximal est inférieur ou égal à 0,2 mrad, de préférence inférieur ou égal à 0,15 mrad, de manière particulièrement préférée inférieur ou égal à 0,1 mrad.

3. Agencement de projection selon la revendication 1 ou 2, dans lequel le rayon de courbure vertical (R) dans la zone HUD (B) est compris entre 7 m et 9 m.

4. Agencement de projection selon l'une des revendications 1 à 3, dans lequel la vitre interne (3) présente une épaisseur de 0,5 mm à 0,9 mm, de préférence de 0,6 mm à 0,8 mm, et dans lequel la vitre externe (2) présente une épaisseur de 1,4 mm à 1,8 mm.

5. Agencement de projection selon la revendication 4, dans lequel la vitre interne (3) est une vitre trempée chimiquement.

6. Agencement de projection selon l'une des revendications 1 à 5, dans lequel la couche intermédiaire (4) présente une épaisseur minimale de 0,2 mm à 2 mm, de préférence de 0,3 mm à 1 mm, de manière particulièrement préférée de 0,5 mm à 0,9 mm.

7. Agencement de projection selon l'une des revendications 1 à 6, dans lequel la couche intermédiaire (4) contient au moins du butyral de polyvinyle (PVB), de l'éthylène-acétate de vinyle (EVA), du polyuréthane (PU) ou des mélanges, copolymères ou dérivés de ceux-ci.

8. Agencement de projection selon l'une des revendications 1 à 7, dans lequel la vitre externe (2) contient du verre sodocalcique et dans lequel la vitre interne (3) contient du verre sodocalcique ou du verre aluminosilicaté.

9. Agencement de projection selon l'une des revendications 1 à 8, dans lequel la couche intermédiaire (4) est réalisée sous la forme d'un film multicouche à effet d'amortissement acoustique.

10. Procédé de fabrication d'un agencement de projection pour un affichage tête haute (HUD) selon l'une des revendications 1 à 9, comprenant
- un pare-brise de véhicule (1), comprenant une vitre externe (2) et une vitre interne (3), qui sont reliées l'une à l'autre par une couche intermédiaire thermoplastique (4), et présentant un bord supérieur (O), un bord inférieur (U) et une zone HUD (B) pouvant être irradiée par un projecteur (5), dans lequel l'épaisseur de la couche intermédiaire thermoplastique (4) est variable, au moins dans la zone HUD (B), dans la direction verticale entre le bord supérieur (O) et le bord inférieur (U), avec un angle de coin (α) inférieur ou égal à 0,3 mrad, dans lequel l'angle de coin (α) varie de manière non linéaire du bord inférieur (U) au bord supérieur (O); et
- un projecteur (5) orienté vers la zone HUD (B) et générant une image virtuelle (7) avec une distance de projection (d) d'au moins 5 m;
dans lequel le procédé comprend au moins les étapes de procédé suivantes:
(a) Détermination de la zone HUD (B) du pare-brise (1);
(b) Établissement d'un profil du rayon de courbure vertical (R), dans lequel le rayon de courbure vertical (R) dans la zone HUD (B) est d'au moins 7 m;
(c) Fabrication du pare-brise (1) avec l'angle de coin (α) et le rayon de courbure vertical (R) déterminé;
(d) Disposition du pare-brise (1) et du projecteur (5) l'un par rapport à l'autre, de manière à former l'agencement de projection,
dans lequel l'angle de coin (α) est introduit par étirage dans un film thermoplastique d'épaisseur constante.
